# EUROPÄISCHE PATENTSCHRIFT

(11) **EP 3 072 863 B1**
(45) Veröffentlichungstag und Bekanntmachung des Hinweises auf die Patenterteilung: **14.08.2019**
(21) Anmeldenummer: 16161538.0
(22) Anmeldetag: 22.03.2016
(51) Int. Cl.: C04B 41/45, C04B 41/00, C04B 41/61, C04B 28/02, C04B 111/80

(54) **VERFAHREN ZUR HERSTELLUNG EINES ZEMENT-FASER KOMPOSITS**
METHOD FOR PRODUCING A CEMENT-FIBRE COMPOSITE
PROCEDE DE FABRICATION D'UN ELEMENT COMPOSITE FIBRE/CIMENT

(30) Priorität: 23.03.2015 EP 15160426
(43) Veröffentlichungstag der Anmeldung: 28.09.2016
(73) Patentinhaber: Swisspearl Group AG, 8867 Niederurnen (CH)
(72) Erfinder: Schweizer, Ueli, 8037 Zürich (CH); Wirth, Markus, 8738 Uetliburg (CH)
(74) Vertreter: Koelliker, Robert

(56) Entgegenhaltungen:
- EP-A1- 2 687 346
- EP-A2- 0 116 858
- AT-B- 133 512
- JP-A- H08 133 864
- US-A- 1 463 961
- US-A- 2 296 453
- US-A1- 2004 159 073
- Scott Cohen, The Green Scene: "Embedded Glass Countertops - ConcreteNetwork.com", ConcreteNetwork.com , 10. November 2008 (2008-11-10), XP002743605, Gefunden im Internet: URL:http://www.concretenetwork.com/outdoor -kitchens/glass-embed-countertops.html [gefunden am 2015-08-24]

## Beschreibung

Die vorliegende Erfindung betrifft ein neuartiges Verfahren zur Herstellung eines Zement-Faser Komposits, den Zement-Faser Komposit erhältlich nach dem neuartigen Verfahren, die Verwendung des Zement-Faser Komposits sowie eine Fassade umfassend den Zement-Faser Komposit.

Der sichtbare Bereich des Aussen- und Innenbereichs von Gebäuden spielt in der heutigen Zeit eine immer wesentlichere Rolle. Denn optisch attraktive Räume, Wände und Gebäude gewinnen bei der Bauherrschaft mehr und mehr an Bedeutung und sind daher heute ein wichtiger Bestandteil der Architektur.

Daher erstaunt es wenig, wenn Architekten und Designer nach immer neuen Möglichkeiten suchen, die verschiedensten Aussen- und Innenbereiche von Gebäuden mit attraktiven Materialien zu verkleiden.

Beton ist für die Erstellung von Gebäuden ein oft verwendeter Baustoff. Dabei tritt vermehrt auch die Oberfläche in den Vordergrund, da diese bei geeigneter Behandlung eine spezielle Oberflächenoptik sowie eine spezielle Oberflächenhaptik aufweisen kann. Unter Oberflächenhaptik - auch lediglich Haptik genannt - versteht der Fachmann die Wahrnehmung einer Oberfläche durch Berühren, resp. Betasten, beispielsweise indem man mit den Fingern leicht hin und her fährt. Solche Oberflächen mit spezieller Oberflächenhaptik sind typischerweise auch gut optisch wahrnehmbar und weisen in der Regel einen interessanten und wünschenswerten Effekt auf, welcher das Auge als optisch lebendige Schicht wahrnimmt.

Im Artikel "Embedded Glass Countertops" der Zeitschrift "The Green Scene" von S. Cohen wird beschrieben, wie Glas Splitter auf die Oberfläche von Küchenabdeckungen aus Beton eingebracht werden. Dabei wird in einem ersten Schritt eine Form hergestellt und beispielsweise Armierungseisen in die Form eingebracht. Anschliessend wird der Beton in die Form gegossen und vibriert, wobei bevorzugt ein Acrylat-Bindemittel zugegeben wird, um die Glas Splitter besser zu binden. Nach einem weiteren Schritt werden die Glas Splitter auf die Beton Oberfläche aufgetragen und in die Oberfläche eingedrückt. Anschliessend wird die Oberfläche geglättet, der Beton aushärten lassen und geschliffen.

Die US 2 296 453 beschreibt ein Verfahren zum Formen von Beton Produkten welche typischerweise eine Armierung aufweisen, wobei sich an der Oberfläche exponierte Aggregate befinden. Dabei wird eine Betonmischung in eine Form gegossen und Aggregate auf die erhaltene Beton Oberfläche aufgesprüht bevor der Beton ausgehärtet ist. Anschliessend werden die Aggregate teilweise in den Beton eingerollt und eingepresst. Und die US-A-2004/159073 beschreibt ein Verfahren zur ästhetischen Oberflächenbehandlung von monolithischen Betonböden.

Beton wird aus einem Gemisch von Zement, Wasser, Sand und Kies hergestellt. Unter Kies wird ein Lockersediment mit Korngrössen von bis zu 6 cm und mehr verstanden. Dementsprechend besitzt Beton nicht nur eine Schichtdicke welche die Schichtdicke des eingesetzten Kieses deutlich übertrifft, sondern die wässrige Phase zwischen den Sand und Kies Partikeln besteht im Wesentlichen aus Zement und Wasser und ist entsprechend - im ungehärteten Zustand - niederviskos. Somit ist ungehärteter Beton fliess- und pumpbar, wodurch er zur Aushärtung eingeschalt werden muss. Dementsprechend lassen sich Partikel in die Oberfläche von nicht ausgehärtetem Beton entsprechend gut und mit wenig Kraft einbringen.

Für Verkleidungen - auch Bekleidungen genannt - von Gebäudeflächen, wie beispielsweise vorgehängte Gebäudefassaden und insbesondere hinterlüftete Fassaden, eignet sich jedoch Beton weniger. Denn hierzu müssten Betonplatten verwendet werden, die nicht nur eine relativ grosse Schichtdicke aufweisen, sondern insbesondere auch ein pro Flächeneinheit sehr grosses Raumgewicht haben, was sich vor allem beim Transport solcher Elemente sowie bei der Verkleidung kleiner Räume nachteilig auswirkt. Zudem können Betonplatten nur mit grösserem Aufwand in die richtige Grösse geschnitten werden.

Mit Zement-Faser Kompositen, auch Faser-Zement Komposite oder nur Faserzemente genannt, können jedoch äusserst dünnwandige Platten hergestellt werden mit einer Schichtdicke von beispielsweise 1 cm oder weniger. Solche Zement-Faser Komposite, d.h. Faserzemente, umfassen - bezogen auf den Trockengehalt - beispielsweise 20 bis 99,5 Gew.-% Zement, 0.5 bis 15 Gew.-% Fasern, 0 bis 78 Gew.-% Füllstoffe und weitere Additive. Dabei weisen die für die Herstellung von Faserzement Platten eingesetzten Rohstoffe eine Partikelgrösse von maximal wenigen Millimetern auf. Dementsprechend besitzt die Summe aller bei der Herstellung von Faserzement eingesetzten Rohstoffe eine Oberfläche, die um Potenzen höher ist als die Oberfläche der bei der Herstellung von Beton eingesetzten Rohstoffe. Dies hat wiederum den Effekt, dass das bei der Herstellung von Faserzementen eingesetzte Wasser wesentlich besser physikalisch gebunden ist, was - im Gegensatz zu Beton - zu einer deutlich höheren Viskosität der ungehärteten Faserzement Mischung führt. Demzufolge unterscheiden sich Faserzemente nicht nur bei der herstellbaren Schichtdicke deutlich von Beton, sondern gerade auch bei der Viskosität des ungehärteten Faserzements resp. des ungehärteten Betons. Dies zeigt sich u.a. auch im Eindrücken von auf der Oberfläche eingestreuten Partikeln: Was bei Beton einfach durchführbar ist, ist bei Faserzementen mit wesentlich mehr Schwierigkeiten verbunden. Demzufolge unterscheiden sich Beton und Zement-Faser Komposite, d.h. Faserzemente, signifikant voneinander.

So beschreibt die US 1 463 961 eine farbige Zement Zusammensetzung sowie deren Herstellmethode, bei welcher eine Asbest-haltige Zementzusammensetzung mit rotem Eisenoxid versetzt wird, wodurch eine Färbung der ganzen, d.h. auch inneren, Zementmatrix erhalten wird. Diese wässrige Mischung wird dann mittels einer Walze auf ein Band aufgetragen. In einem späteren Schritt wird anschliessend ein weiteres Färbungsmaterial in nasser Form auf die Oberfläche des Asbest-Zement-Streifens aufgetragen. Das Färbungsmaterial in nasser Form ist nicht näher spezifiziert. Es wird auch nicht erwähnt, dass das Färbungsmaterial in die Zementmatrix weder eingedrückt noch eingepresst wird. Vielmehr versteht der Fachmann aus der Beschreibung der US 1 463 961, dass eine Beschichtung auf die Zementmatrix aufgetragen wird, wie dies heute weit verbreitet ist.

Die AT-B-133 512 beschreibt ein Verfahren zum Braunfärben von Kunststeinplatten, die aus hydraulischem Bindemittel wie Zement, Faserstoffen wie Asbest und gegebenenfalls Füllstoffen hergestellt werden. Auf die Oberfläche der noch ungebundenen Platten wird gemahlenes Eisen aufgestreut. Das Eisenpulver dringt von selbst bis zu einer gewissen Tiefe in die weiche Kunststeinmasse ein oder kann in diese eingedrückt werden. Aufgrund der geringen Stärke der Farbschicht erfolgt gemäss der AT-B-133 512 bald eine Abnutzung und damit eine zusammenhängende Aufhellung, welche jedoch durch Rostbildung auf den eingebrachten Eisenteilchen kompensiert wird. Somit ist das Eisenpulver nur mangelhaft mit der Oberfläche verbunden und lässt sich einfach davon entfernen.

Die JP-A-H08 133864 beschreibt eine Faser-verstärkte Zement-Platte mit einer mehrstufigen Beschichtung, welche eine Verschlechterung der Stärke des beschichteten Films, d.h. der Beschichtung, verhindern soll. Dadurch soll verhindert werden, dass farbige Sandkörner, die zuvor in die Oberfläche der Zement-Platte eingebracht wurden, freigesetzt werden und sich somit aus der Zement-Platte herauslösen. Das Verfahren zur Herstellung der Zement-Platte umfasst das gleichmässige Beschichten von farbigen Sandkörnern auf der Oberfläche der nicht ausgehärteten Faser-verstärkten Zement-Platte, Drücken der beschichteten Oberfläche um die farbigen Körner unter die Oberfläche der nicht ausgehärteten Faser-verstärkten Zement-Platte einzubetten, aushärten der Zement-Platte mittels einem Dampf-Aging-Verfahren, Beschichten der ausgehärteten Oberfläche mit verschiedenen Beschichtungen und einer Imprägnierung. Das Hineindrücken der farbigen Körner in die Zement-Platte erfolgt mittels einer Rolle, womit nur ein geringer Druck erzeugt werden kann, da sonst die Zement-Platte zerstört würde. Demzufolge werden die Körner nicht formschlüssig in die Zement-Platte hineingedrückt, was zur Folge hat, dass sie sich auch wieder aus der Zement-Platte herauslösen können. Aus diesem Grund wird die erhaltene Zement-Platte beschichtet, wobei erst durch die Beschichtung die notwendige Formschlüssigkeit der eingedrückten Partikel erhalten wird.

Daher stellt sich die Aufgabe, Verkleidungselemente mit Beton-naher Oberflächenoptik und Oberflächenhaptik bereit zu stellen, die im Aussen- und Innenbereich von Gebäuden eingesetzt werden können. Es ist wichtig, dass Elemente, beispielsweise Partikel, welche für die gewünschte Oberflächenhaptik verantwortlich sind, auch ohne zusätzliche, nachträglich aufgebrachte Beschichtung fest und dauerhaft mit den Verkleidungselementen verbunden sind, sodass sie auch unter Belastung nicht herausfallen. Dies soll insbesondere auch bei neu erhaltenen Randzonen nach einem Zuschneiden der Verkleidungselemente der Fall sein. Die Verkleidungselemente sollen auch möglichst dünnwandig und trotzdem stabil und dauerhaft sein, damit sie auch bei einer Leichtbauweise eingesetzt werden können. Zudem sollen sie störungsfrei verarbeitbar und im Innen- wie auch im Aussenbereich eine hohe Belastbarkeit und Altersbeständigkeit aufweisen.

Diese Aufgabe konnte überraschenderweise gelöst werden mit einem Verfahren zur Herstellung eines Zement-Faser Komposits K_{N} mit einer Oberfläche O_{N}, wobei auf mindestens einer Oberfläche O_{R} eines noch teigartig feuchten Zement-Faser Komposits K_{R} Partikel P aufgebracht und in die Oberfläche O_{R} des Zement-Faser Komposits K_{R} eingepresst werden, um den Zement-Faser Komposit K_{N} mit der Oberfläche O_{N} zu erhalten, wobei mindestens 90 Gew.% der Partikel P eine Partikelgrösse zwischen 0,05 und 15 mm, gemessen nach DIN 66165, aufweisen, dadurch gekennzeichnet, dass die Partikel P mit einem Druck von mindestens 1000 to/m², in die Oberfläche O_{R} des Zement-Faser Komposits K_{R} eingepresst werden.

Beansprucht wird auch ein Zement-Faser Komposit K_{N}, d.h. ein Faserzement K_{N}, erhältlich nach dem erfindungsgemässen Verfahren.

Der neuartige Zement-Faser Komposit K_{N}, d.h. Faserzement K_{N}, welcher mit dem erfindungsgemässen Verfahren hergestellt wird, und der Zement-Faser Komposit K_{N} erhältlich gemäss dem erfindungsgemässen Verfahren, weisen nicht nur die gewünschte Oberflächenoptik und Oberflächenhaptik auf, sondern diese können auch mit der Art, Anzahl, Grösse und Form der eingesetzten Partikel P gezielt variiert, geändert und eingestellt werden. Durch den angewendeten Druck werden die Partikel P überraschenderweise so stark in die rohe, ursprüngliche Oberfläche O_{R} hineingepresst, dass sie formschlüssig in der neu erhaltenen Oberfläche O_{N} eingebettet sind. Mit anderen Worten: Das Material des Faserzements wird durch den Partikel P nicht nur weggepresst um dem Partikel P Platz zu machen, sondern ein Teil der Matrix des Zement-Faser Komposits, u.a. Zementgel, fliesst nach dem Einpressen des Partikels P an der Oberfläche wieder über einen Teil des Partikels P, sodass dieser formschlüssig in der Oberfläche O_{N} des neuen Faserzements K_{N} eingebettet ist. Zudem werden auch allfällige Luftporen und eingeschlossene Luftlöcher im Bereich der eingeschlossenen Partikel P weggepresst, wodurch sich u.a. die Adhäsion zwischen dem Zementgel des Faserzements K_{N} und den Partikeln P erhöht. Dadurch sind die eingepressten Partikel P sowohl mechanisch wie chemisch im Faserzement K_{N} verankert, sodass sie auch unter mechanischer Belastung und ohne zusätzliche Beschichtung im Faserzement K_{N} verankert bleiben und nicht herausfallen. Überraschenderweise ist diese Verankerung so stark, dass die Partikel P sogar auch nach einem Zuschneiden der erfindungsgemässen Faserzementplatten, welche als Verkleidungselemente verwendet werden können, bei den neu erhaltenen Randzonen genügend verankert sind, dass sie nicht herausfallen.

Zudem war es für den Fachmann unerwartet und nicht vorhersehbar, dass der gemäss der Erfindung hergestellte Zement-Faser Komposit K_{N}, d.h. Faserzement K_{N}, mit der gewünschten Oberflächenoptik und Oberflächenhaptik auf einfache Art und Weise in hoher Qualität gefertigt werden kann. Da der erfindungsgemässe Zement-Faser Komposit K_{N} und gemäss der Erfindung erhaltene Zement-Faser Komposit K_{N} auf nur einer Schicht beruhen kann, d.h. keine mehrschichtige Struktur aufweisen muss, kann sich bei dieser einen Schicht auch keine Schicht ablösen. Dadurch ist eine sehr hohe Frost-Tau-Beständigkeit wie auch Altersbeständigkeit gewährleistet. Zudem kann der Zement-Faser Komposit K_{N} auch - beispielsweise werkseitig - mit einer Beschichtung und/oder Imprägnierung behandelt werden. Hierdurch erhöht sich zusätzlich die Altersbeständigkeit wie auch die Resistenz gegenüber mechanischer Beanspruchung, z.B. durch Kratzen, wie auch chemischer Behandlung, z.B. durch Reinigungsmittel.

Der mit dem erfindungsgemässen Verfahren hergestellte Zement-Faser Komposit K_{N}, d.h. Faserzement K_{N} und der Zement-Faser Komposit K_{N} erhältlich gemäss dem erfindungsgemässen Verfahren, können trotz geringer Plattendicke sehr hohen physikalischen Anforderungen genügen und sind somit für die Leichtbauweise geeignet. So kann beispielsweise eine gewünschte Oberflächenoptik und Oberflächenhaptik mit einem Zement-Faser Komposit mit einer Schichtdicke von lediglich 1 cm oder weniger erzielt werden. Ein Zement-Faser Komposit mit einer Schichtdicke von lediglich 8 mm weist beispielsweise ein Gewicht von nur ca. 16 kg/m² auf, wobei keine Kompromisse bei den physikalischen Eigenschaften gemacht werden müssen. Dadurch können auch grossformatige Kompositplatten hergestellt werden, welche auf Baustellen immer noch einfach verarbeitbar sind. Dies ermöglicht auf der Baustelle eine sehr rationelle Arbeitsweise. Zudem können die Kompositplatten auch problemlos auf die notwendige Grösse zugeschnitten werden, was für einen vielfältigen Einsatz der Kompositplatten wichtig ist.

Gegenstand der Erfindung ist zudem auch die Verwendung des nach dem erfindungsgemässen Verfahren hergestellten Zement-Faser Komposits K_{N} zur Verkleidung von Fassaden, Wänden, Böden, Dielen und/oder Dächern, insbesondere im Aussen- und/oder Innenbereich von Gebäuden, Schiffen, Fahrzeugen, Flugzeugen, Tunneln und/oder U-Bahn Stationen.

Beansprucht wird zudem auch die Verwendung des nach dem erfindungsgemässen Verfahren hergestellten Zement-Faser Komposits K_{N} als äussere Schicht einer Gebäudefassade, insbesondere einer vorgehängten Gebäudefassade.

Durch die erfindungsgemässe Verwendung des Zement-Faser Komposits K_{N} - beispielsweise in Form von Kompositplatten - können überraschenderweise Flächen wie Fassaden, Wänden, Böden, Dielen und/oder Dächern im Innen- wie auch im Aussenbereich von Gebäuden, Schiffen, Fahrzeugen, Flugzeugen, Tunneln und/oder U-Bahn Stationen mit einer hochwertigen, langlebigen und resistenten Verkleidung - beispielsweise Fassadenverkleidungsmaterial, auch Fassadenbekleidungsmaterial genannt - mit einzigartiger Oberflächenoptik und Oberflächenhaptik auf einfache Art und Weise ausgekleidet werden.

Beansprucht wird zudem auch eine Fassade, bevorzugt eine Gebäudefassade, insbesondere eine vorgehängte - und somit eine hinterlüftete - Gebäudefassade, umfassend mindestens einen Zement-Faser Komposit K_{N}, d.h. Faserzement K_{N}, erhalten nach dem erfindungsgemässen Verfahren und/oder ein nach dem erfindungsgemässen Verfahren hergestellter Zement-Faser Komposit K_{N}.

Die erfindungsgemäss beanspruchte Fassade besitzt eine Oberfläche O_{N} mit einzigartiger Oberflächenoptik und Oberflächenhaptik. Überraschenderweise ist sie - auch mit grossformatigen Kompositplatten auf Basis des erfindungsgemässen Zement-Faser Komposits K_{N}, d.h. Faserzement K_{N} - einfach herstellbar, wetterbeständig, langlebig und dauerhaft. Zudem eignet sie sich insbesondere auch als hinterlüftete Gebäudefassade.

Aufgrund des geringen Eigengewichts des erfindungsgemässen Zement-Faser Komposits K_{N} können diese auch in Form von grossformatigen Kompositplatten mit der neuartigen Oberflächenoptik und Oberflächenhaptik auf herkömmliche Art und Weise befestigt werden. So braucht es beispielsweise bei hinterlüfteten Gebäudefassaden auch mit grossformatigen Kompositplatten keine - oder nur wenige - zusätzliche Befestigungselemente pro Platte. Solche Platten können zudem in der Regel von Hand und ohne Zusatzgeräte an der Fassade befestigt werden. Auch müssen aufgrund des geringeren Gewichts auch bei grossformatigen Kompositplatten keine Befestigungsschienen eingesetzt werden. Dies ist insbesondere bei der Leichtbauweise von Gebäuden und Fassaden von grossem Vorteil.

Das erfindungsgemässe Verfahren zur Herstellung eines Zement-Faser Komposits K_{N}, d.h. Faserzement K_{N}, mit der Oberfläche O_{N}, d.h. ,mit der neuartigen Oberfläche O_{N}, bei welchem auf mindestens eine unbehandelte, rohe Oberfläche O_{R}, eines noch teigartig feuchten Zement-Faser Komposits K_{R} Partikel P aufgebracht und in die Oberfläche O_{R} des Zement-Faser Komposits K_{R} eingepresst werden, um den erfindungsgemässen, neuartigen Zement-Faser Komposit K_{N} mit der neuartiger Oberfläche O_{N} zu erhalten, kann im Wesentlichen bei allen Verfahren zur Herstellung von Zement-Faser Komposits, auch Faser-Zement Komposits genannt, angewandt werden.

Geeignete Verfahren zur Herstellung von Zement-Faser Komposits, d.h. von Faserzementen, sind dem Fachmann bekannt. Bekannte Verfahren umfassen beispielsweise den Hatschek-Prozess, Magnani-Prozess, das Injektion-, Extrusion-, Autoklavier- und Flow-on-Verfahren. Nach einem besonders bevorzugten Verfahren wird der Zement-Faser Komposit nach dem Hatschek-Prozess hergestellt und anschliessend in der Regel gepresst.

Mit dem erfindungsgemässen Verfahren können Partikel P auf eine, mehrere oder alle Oberflächen des teigartig feuchten Zement-Faser Komposits K_{R} aufgebracht werden um einen Zement-Faser Komposit K_{N} mit mindestens einer neuartigen Oberfläche O_{N} zu erhalten.

Das - gemäss dem erfindungsgemässen Verfahren - Aufbringen der Partikel P auf die Oberfläche O_{R} des Zement-Faser Komposits K_{R} kann vor oder nach dem Pressen des herzustellenden Zement-Faser Komposits erfolgen. Wenn die Partikel P vor dem Pressen auf die Oberfläche O_{R} aufgebracht werden, werden sie direkt beim eigentlichen Pressen der Zement-Faser Komposite in die Oberfläche O_{R} des noch teigartig feuchten Zement-Faser Komposits eingepresst. Wenn die Partikel P nach dem eigentlichen Pressen des Zement-Faser Komposits auf die Oberfläche O_{R} aufgebracht werden, werden sie nachträglich bei einem weiteren Press-Schritt in die Oberfläche O_{R} des noch nicht vollständig erstarrten Zement-Faser Komposits eingepresst.

Die Partikel P können beispielsweise mechanisch, mit einem Sieb, einer Walze, einem Streugerät, manuell und/oder sonstiger geeigneter Methoden auf die Oberfläche O_{R} des Zement-Faser Komposits aufgebracht und/oder eingestreut werden. Alternativ - oder zusätzlich - können die Partikel P in einem ersten Schritt auf einen Untergrund aufgebracht und/oder aufgestreut werden, wobei der noch feuchte, gepresste oder ungepresste Zement-Faser Komposit K_{R} in einem nachfolgenden Schritt auf den Untergrund mit den Partikeln P aufgebracht und auf den Untergrund gepresst wird, wodurch die Partikel P in die Oberfläche O_{R} des Zement-Faser Komposits K_{R} eingepresst werden, um einen Zement-Faser Komposit K_{N} mit neuartiger Oberfläche O_{N} zu erhalten.

Das Pressen der Partikel P in die Oberfläche O_{R} des Zement-Faser Komposits K_{R} kann beispielsweise mittels hydraulischer Presse und/oder mechanischer Presse erfolgen. Geeignete Pressen sind dem Fachmann bekannt.

Die Pressdauer hängt vom Pressdruck, der Temperatur und der Beschaffenheit des Zement-Faser Komposits K_{R} ab. Typischerweise wird während etwa 2 bis 120 Minuten, bevorzugt während etwa 30 bis 50 Minuten gepresst. Die Presstemperatur beträgt typischerweise bis etwa 50°C, wobei sie gegebenenfalls auch höher sein kann. Die Pressbedingungen können während dem Pressen konstant, d.h. stationär, oder auch transient, d.h. instationär, sein.

In einer bevorzugten Ausführungsform werden die Partikel P so aufgebracht und in die Oberfläche O_{R} des Zement-Faser Komposits K_{R} eingepresst, dass die neuartige Oberfläche O_{N} ein geschlossenes Profil aufweist und somit die in die Oberfläche O_{R} eingepressten Partikel P nicht aus der neuartigen Oberfläche O_{N} herausragen. Insbesondere werden die Partikel P so in die Oberfläche O_{R} des Zement-Faser Komposits K_{R} eingepresst, dass sie formschlüssig im Zement-Faser Komposit K_{R}, und somit auch formschlüssig im Zement-Faser Komposit K_{N} eingebettet sind. Dabei versteht der Fachmann unter formschlüssig das Ineinandergreifen der Partikel P und des Zement-Faser Komposits K_{N}, dass die Partikel P dort, wo die Form der Partikel P dies zulässt, sogar unter die Oberfläche O_{N} gepresst werden, d.h. dass sich nach dem Einpressen der Partikel P in die Oberfläche O_{N} erneut ein Teil der Matrix des Zement-Faser Komposit Materials K_{N}, u.a. Zementgel, über einen Teil der eingedrückten Partikel P fliesst und dies von verschiedensten Seiten umfasst. Dies kann beispielsweise durch einen entsprechend hohen Anpressdruck und einer genügend teigartig feuchten Oberfläche O_{R} bewerkstelligt werden. Der Fachmann kann auf einfache Art und Weise geeignete Einstellungen ermitteln. Bei Bedarf kann die erhaltene neuartige Oberfläche O_{N} nachträglich auch noch zusätzlich abgeschliffen werden.

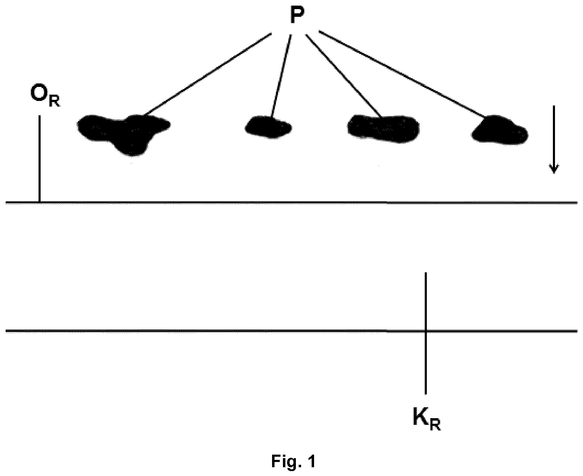

Ein solches geschlossenes Profil ist beispielhaft in Fig. 1 dargestellt. Es zeichnet sich u.a. aus, dass - wenn mit einem Watte Bausch leicht über das geschlossene Profil, insbesondere über die neuartige Oberfläche O_{N}, gestrichen wird, keine resp. keine wesentlichen Watte Rückstände sichtbar sind.

Nachdem die Partikel P in die Oberfläche O_{R} des Zement-Faser Komposits K_{R} eingepresst wurden, wird der erfindungsgemäss hergestellte teigartig feuchte Zement-Faser Komposit K_{N} typischerweise vollständig ausgehärtet und hydratisiert.

Der Begriff "teigartig feuchter Zement-Faser Komposit" ist dem Fachmann bekannt. Es bezeichnet den noch nicht vollständig erstarrten - und somit noch nicht vollständig ausgehärteten - Zement-Faser Komposit.

Bei Bedarf kann das Erstarrungsverhalten von Zement-Faser Kompositen typischerweise mit einem Vicat Testgerät nach DIN EN 196-3 gemessen werden. Dabei wird mit dem Vicat Testgerät eine Nadel auf die Oberfläche des Zement-Faser Komposit Probekörpers gebracht. Diese wird anschliessend mit einer definierten Kraft auf die Oberfläche gepresst. Diese Kraft reicht aus, um die Nadel vor Erstarrungsbeginn durch den ganzen Zement-Faser Komposit zu pressen. Während des Erstarrens des Zementes - und somit des ganzen Zement-Faser Komposits - verfestigt sich die Masse des Zement-Faser Komposits zusehends. Dadurch reduziert sich die Eindringtiefe der Nadel im Probekörper des Vicat Testgerätes zusehends. Nach Erstarrungsende weist jedoch der Zement-Faser Komposit aufgrund der Hydratation des Zementes eine so hohe Härte aus, dass die Nadel nicht mehr in den Komposit eindringt und auch keinen Abdruck mehr auf der Oberfläche des ausgehärteten Zement-Faser Komposits hinterlässt. Somit bildet die Eindringtiefe der Nadel in den Probekörper ein Mass der Erstarrung des Zement-Faser Komposits und somit auch des Zement-Faser Komposits K_{R} resp. Zement-Faser Komposits K1.

In einer bevorzugten Ausführungsform des erfindungsgemässen Verfahren weist der noch teigartig feuchte Zement-Faser Komposit K_{R} - und somit der nicht vollständig erstarrte Zement-Faser Komposit K_{R} - eine Eindringtiefe der Nadel eines Vicat Testgerätes von mindestens 5%, bevorzugt mindestens 10%, und/oder höchstens 100% der Eindringtiefe der Nadel vor Erstarrungsbeginn des Zement-Faser Komposits K, gemessen nach DIN EN 196-3, auf.

Das erfindungsgemässe Verfahren zur Herstellung des Zement-Faser Komposits K_{N} und der Zement-Faser Komposit K_{N} erhältlich gemäss dem erfindungsgemässen Verfahren weisen überraschenderweise keine Einschränkung in Bezug auf die Zusammensetzung des Zement-Faser Komposits K_{R} auf. Vorteilhafterweise umfasst, insbesondere besteht aus, die Zusammensetzung des Zement-Faser Komposits K_{R} - und somit auch des erfindungsgemäss erhaltenen Zement-Faser Komposits K_{N} (i) 20 bis 99,5 Gew.-%, insbesondere 50 bis 98 Gew.-%, ganz besonders bevorzugt 70 bis 95 Gew.-%, Zement, (ii) 0,5 bis 15 Gew.-%, bevorzugt 1 bis 10 Gew.-%, insbesondere 1 bis 6 Gew.-%, ganz besonders bevorzugt 2 bis 6 Gew.-%, Fasern, (iii) 0 bis 78 Gew.-%, insbesondere 0 bis 48 Gew.-%, ganz besonders bevorzugt 0 bis 28 Gew.-%, Füllstoffe und/oder Pigmente, sowie (iv) 0 bis 30 Gew.-%, insbesondere 0 bis 20 Gew.-%, ganz besonders bevorzugt 0 bis 10 Gew.-%, weitere Additive, bezogen auf 100 Gew.-% Trockengehalt der zur Herstellung des Zement-Faser Komposits K_{R}, K_{N} eingesetzten Rohstoffe, wobei die Summe der einzelnen Komponenten 100 Gew.-% ergibt.

Während die Zusammensetzung des Zement-Faser Komposits K_{R} erfindungsgemäss sehr breit definiert ist, gehört Beton aufgrund seiner ganz anderen Zusammensetzung und Eigenschaften erfindungsgemäss nicht dazu.

Überraschenderweise weist das erfindungsgemässe Verfahren keine wesentlichen Einschränkungen in Bezug auf die Art der einzusetzenden Partikel P auf. Es kann eine Art Partikel P eingesetzt werden oder eine Kombination von zwei oder mehr Arten von Partikeln P.

In einer bevorzugten Ausführungsform werden die Partikel P ausgewählt aus metallischen Partikeln, mineralischen Partikeln, Glaspartikeln, Kunststoffpartikeln und/oder Partikeln aus Perlmutt und/oder Edelsteinen wie Diamant, beispielsweise Diamantstaub. Geeignete metallische Partikel sind beispielsweise auf Basis von Eisen, Stahl, Aluminium, Kupfer und/oder Bronze. Geeignete mineralische Partikel sind beispielsweise auf Basis von Natursteinen, d.h. Naturstein Granulat, Glimmer, Quarz, Quarzit, Granit, Gneis, Marmor, Ton, Schiefer wie Tonschiefer, Ölschiefer, Fischschiefer, Posidonienschiefer, Kupferschiefer und/oder Naturschiefer, Tonstein, Siltstein, Mergel, Graphit, Titanaten wie Titandioxid, Ferrit und/oder Keramik. Geeignete Kunststoffpartikel sind beispielsweise aus PVC, PMMA, PET, PBT, Fiberglas, Polystyrol, Polyethylen, Polypropylen, Polycarbonat, Styrol-Acrylnitril Copolymer, Polyester, Polyamid, Polyurethan, Polyphenol und/oder Epoxide.

In einer bevorzugten Ausführungsform weisen mindestens 90 Gew.-%, insbesondere mindestens 95 Gew.-%, der im erfindungsgemässen Verfahren eingesetzten Partikel P eine Partikelgrösse von zwischen 0,1 und 10 mm, bevorzugt zwischen 0,2 und 5 mm, gemessen nach DIN 66165, auf.

Die Menge der im erfindungsgemässen Verfahren eingesetzten Partikel P wird vorteilhafterweise so gewählt, dass die Partikel P etwa 0,1 bis 99 Flächen-%, bevorzugt 0,2 bis 60 Flächen-%, insbesondere 0,3 bis 40 Flächen-%, der neuartigen Oberfläche O_{N} des Zement-Faser Komposits K_{N} bedecken. Die Messung des Flächenanteils der Partikel P an der gesamten Fläche ist dem Fachmann bekannt. Typischerweise kann er mikroskopisch unter Zuhilfenahme einer geeigneten Software, beispielsweise zur Flächenanteilmessung mit oder ohne Bildanalyse-Software bestimmt werden. Geeignete Software ist dem Fachmann bekannt und wird beispielsweise von der Imagic Bildverarbeitung AG in Glattbrugg (Schweiz) angeboten. Alternativ kann der Flächenanteil gemäss der DIN EN ISO 643 unter Verwendung des Vergleichsverfahrens ermittelt werden.

Der mit dem erfindungsgemässen Verfahren hergestellten Zement-Faser Komposit K_{N} und der Zement-Faser Komposits K_{N} erhalten nach dem erfindungsgemässen Verfahren können die verschiedensten Formen und Formate aufweisen. In einer bevorzugten Ausführungsform liegen die Komposite K_{N} in Form von Platten, beispielsweise als Fliesen, vor. Solche Platten oder Fliesen können in beliebigen Formaten bereitgestellt werden. Oft ist es vorteilhaft, dass aus logistischen Gründen die Formatgrösse 6 x 8 m oder kleiner beträgt. Typische, nicht-limitierende grossformatige Grössen sind 3.6 x 1.5 m und 3.1 x 1.25 m.

Die Schichtdicke des im erfindungsgemässen Verfahren hergestellten Zement-Faser Komposits K_{N} und des Zement-Faser Komposits K_{N} erhalten nach dem erfindungsgemässen Verfahren beträgt vorteilhafterweise von 3 bis 20 mm, bevorzugt von 3 bis 16 mm, gemessen mit einem Messschieber nach DIN 862. Somit beträgt typischerweise auch die Schichtdicke des eingesetzten Zement-Faser Komposits K_{R} vorteilhafterweise etwa von 3 bis 20 mm, bevorzugt etwa von 3 bis 16 mm, gemessen mit einem Messschieber nach DIN 862.

In einer bevorzugten Ausführungsform des erfindungsgemässen Verfahrens zur Herstellung des Zement-Faser Komposits K_{N} und des Zement-Faser Komposits K_{N} erhältlich gemäss dem erfindungsgemässen Verfahren wird die neuartige Oberfläche O_{N} des Zement-Faser Komposits K_{N} - oder auch alle Flächen des Zement-Faser Komposits K_{N} - mit einer Beschichtung und/oder Imprägnierung behandelt. Dadurch werden die behandelten Oberflächen versiegelt und geschützt, wodurch sich die mechanische Belastbarkeit, beispielsweise durch Kratzen, wie auch die chemische Resistenz, zusätzlich deutlich erhöht. So wurde überraschenderweise auch gefunden, dass die erfindungsgemässen Kompositplatten umfassend eine Beschichtung und/oder Imprägnierung gerade auch im Aussenbereich - insbesondere auch der dem Wetter zugewandten Seite - u.a. eine sehr lange Lebensdauer aufweisen.

Nicht-limitierende Beispiele geeigneter Beschichtungen und/oder Imprägnierungen umfassen Polyurethan (PUR) Lacke, insbesondere 2-Komponenten Polyurethan (2-K PUR) Lacke, Acrylat- und Methacrylat-Lacke, Anti-Graffiti Lacke und/oder strahlenhärtende Lacke. Solche Beschichtungen und/oder Imprägnierungen dienen insbesondere dem Schutz der neuartigen Oberfläche O_{N} - aber auch den anderen behandelten Oberflächen - vor Beschädigung, insbesondere vor mechanischer Beschädigung wie Abrasion, und der Erhöhung der Altersbeständigkeit der neuartigen Oberfläche O_{N} resp. des ganzen Zement-Faser Komposits K1, sowie als Witterungsschutz, Oberflächenschutz und/oder als Anti-Graffiti Schutz. Zudem weisen solche Beschichtungen und/oder Imprägnierungen Staub- und Schmutzpartikeln sowie Fett ab, reduzieren das Wachstum von beispielsweise Moos, Flechten, Bakterien und/oder Pilzen, bewirken ein gutes Reinigungsverhalten und verhindern eine allfällige Verfärbung der darunter liegenden Schichten.

In einer anderen bevorzugten Ausführungsform des mit dem erfindungsgemässen Verfahren erhaltenen Zement-Faser Komposits K_{N} und/oder des erfindungsgemässen Zement-Faser Komposits K_{N} erhältlich nach dem erfindungsgemässen Verfahrens ist an der zur neuartigen Oberfläche O_{N} abgewandten Seite des Zement-Faser Komposits K_{N} mindestens ein Befestigungselement befestigt, um damit den Zement-Faser Komposit K_{N} an einem dafür vorgesehenen Element zu befestigen. Hierzu kann im Wesentlichen jedes für ausgehärtete Zement-Faser Komposite geeignete Befestigungselement verwendet werden. Diese können auf den Zement-Faser Komposit K_{N} geklebt und/oder mechanisch befestigt, beispielsweise geschraubt, werden. Sie können auch - alternative oder zusätzlich - in den Zement-Faser Komposit K_{N} versenkt werden um eine noch bessere und/oder eine Platz sparende Befestigung zu erreichen. Solche Befestigungselemente sind im Handel erhältlich und dem Fachmann bekannt. Ein nicht-limitierendes Beispiel eines geeigneten Befestigungselementes ist u.a. in EP 1 884 606 beschrieben. Solche Befestigungselemente werden beispielsweise oft bei vorgehängten Gebäudefassaden eingesetzt.

Die gemäss dem erfindungsgemässen Verfahren hergestellten Zement-Faser Komposite K_{N} und Zement-Faser Komposite K_{N} erhältlich gemäss dem erfindungsgemässen Verfahren können vielseitig verwendet werden. Erfindungsgemässe, nicht-limitierende Anwendungen umfassen die Verwendung des Zement-Faser Komposits K_{N} und/oder des nach dem erfindungsgemässen Verfahren hergestellten Zement-Faser Komposits K_{N} zur Verkleidung von Fassaden, Wänden, Böden, Dielen und/oder Dächern, insbesondere zur Verkleidung von Fassaden, Wänden, Böden, Dielen und/oder Dächern im Aussen- und/oder Innenbereich von Gebäuden, Schiffen, Fahrzeugen, Flugzeugen, Tunneln und/oder U-Bahn Stationen, sowie als äussere Schicht einer Gebäudefassade, insbesondere vorgehängten Gebäudefassade.

### Beispiel

Zur Herstellung des erfindungsgemässen Faserzements K_{N} wurde ein nach dem Hatschek-Prozess hergestellter, handelsüblicher Faserzement K_{R} eingesetzt. Die für das Beispiel verwendet Zusammensetzung umfasst 80 bis 98 Gew.-% Zement, 2 bis 8 Gew.-% Fasern, 0 bis 16 Gew.-% Füllstoffen und Pigmenten sowie 0 bis 5 Gew.% weitere, dem Fachmann bekannte, Additive, bezogen auf 100 Gew.% Trockengehalt der zur Herstellung der Zementfaserplatte eingesetzten Rohstoffe, und wobei die Summe der einzelnen Komponenten 100 Gew.% ergibt. Dabei zeigte sich, dass die exakte Zusammensetzung des Faserzements K_{R} für die Durchführung des erfindungsgemässen Prozesses keine wesentliche Rolle spielt.
Der durch den Hatschek-Prozess in Form eines kontinuierlichen Bands hergestellte rohe teigartig feuchte Zement-Faser Komposit K_{R}, d.h. Faserzement K_{R}, mit einer Schichtdicke von 10 mm, gemessen mit einem Messschieber nach DIN 862, wurde anschliessend in eine Platte mit der Grösse von 3.1 x 1.25 m geschnitten. Auf diese Platte wurden 155 Gramm Naturstein Granulat, d.h. Partikel P von Hand - regelmässig verteilt - auf die Oberfläche O_{R} gestreut,, wobei mindestens 90 Gew.% der Partikel P eine Partikelgrösse zwischen 0,2 und 3 mm, gemessen nach DIN 66165, aufwiesen. Dadurch wurde eine Oberflächenbedeckung von 2 bis 5 Flächen-% erzielt. Die so mit Partikeln P beschichtete teigartig feuchte Faserzement Platte K_{R} wurde anschliessend in eine hydraulische Presse mit Presstisch und Pressteller der Marke Bell geschoben und während 40 Minuten bei einem steigenden Druck bis 8000 Tonnen, d.h. 2065 Tonnen/m², und bei Raumtemperatur gepresst. Nach dem Pressvorgang wurde die erfindungsgemäss hergestellte Faserzement Platte K_{N}, d.h. Faserzement K_{N} resp. Zement-Faser Komposit K_{N}, von der Presse entfernt und bei Raumklima aushärten lassen. Der so erhaltene Faserzement K_{N} mit der neuartigen Oberfläche O_{N}, d.h. der Oberfläche O_{N}, zeigte eine ausgeprägte spezielle Oberflächenhaptik und Oberflächenoptik. Die eingepressten Partikel P waren formschlüssig in der Oberfläche O_{N} verankert und konnten nicht herausgelöst werden. Auch beim Zerschneiden der Faserzement Platte K_{N} blieben die Partikel P in den neu entstanden Rändern eingebettet.
Die erfindungsgemäss hergestellte Faserzement Platte K_{N} zeigte ansonsten Eigenschaften, insbesondere mechanische, physikalische sowie Alterungs-Eigenschaften, die mit unbehandelten Faserzement Platten ohne Partikel P vergleichbar sind. Auch die Schichtdicke der Faserzement Platten K_{N} ist mit unbehandelten Platten vergleichbar. Die erhaltene Faserzement Platte K_{N} konnte auch wie andere unbehandelte Platten, d.h. Platten ohne die eingepressten Partikel P, beschichtet werden.

Im Folgenden wird eine nicht-limitierende, bevorzugte Ausführungsform anhand einer Zeichnung beschrieben, die nicht einschränkend auszulegen ist. Diese Erläuterungen sind Teil der vorgehenden Beschreibung. Es zeigt:
- Fig. 1:: Einen beispielhaften, rohen teigartig feuchten Zement-Faser Komposit K_{R}, d.h. teigartig feuchten Faserzement K_{R}, dessen Oberfläche O_{R} noch nicht verändert wurde, d.h. noch in der Rohform vorhanden ist. Oberhalb der Oberfläche O_{R} befinden sich Partikel P, welche anschliessend in Pfeilrichtung auf die Oberfläche O_{R} aufgebracht werden.

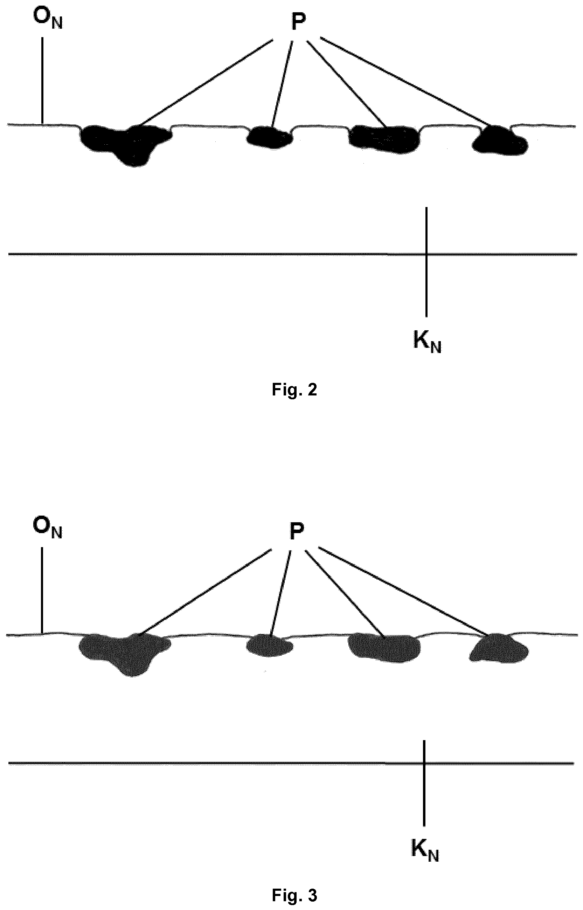

- Fig. 2:: Eine beispielhafte und nicht-limitierende Ausführungsform eines nicht-erfindungsgemässen Zement-Faser Komposits K_{N}, d.h. Faserzement K_{R}, mit neuartiger Oberfläche O_{N}. In den noch rohen, teigartig feuchten Zement-Faser Komposit K_{R} von Fig. 1 wurden die Partikel P aufgebracht und in die Oberfläche O_{R} des Zement-Faser Komposit K_{R} eingepresst. In der Darstellung von Fig. 2 ist die neuartige Oberfläche O_{N} mit einem geschlossenen Profil gezeigt, d.h. die eingepressten Partikel P ragen nicht aus der Oberfläche O_{N} heraus. Zudem sind die Partikel P formschlüssig in die Oberfläche O_{N} des Faserzements K_{N} eingebettet, sodass sie sich beispielsweise auch nach einem Schnitt durch den Faserzements K_{N} nicht herauslösen. Der Einfachheit halber ist in Fig. 1 nur eine neuartige Oberfläche O_{N} gezeigt. Es ist aber auch möglich, dass in die Oberfläche, die der dargestellten Oberfläche O_{N} gegenüber liegt, und/oder in eine oder mehrere Oberflächen, die zur Oberfläche O_{N} winklig - insbesondere rechtwinklig - angeordnet sind, Partikel P aufgebracht werden und in die Oberfläche O_{R} des Zement-Faser Komposits eingepresst werden.
- Fig. 3:: Der Druck auf die Oberfläche O_{N} - und somit auf die Partikel P - des Zement-Faser Komposits K_{N}, d.h. Faserzement K_{N} von Fig. 2 wurde weiter erhöht, wodurch sich die Matrix des Zement-Faser Komposits K_{N}, u.a. das Zementgel des Faserzements K_{N}, an der Oberfläche O_{N} weiter um die Partikel P schliesst und diese noch weiter in den Faserzement K_{N} hineingepresst werden. Dadurch verringert sich die Unebenheit der Oberfläche O_{N} - insbesondere im Bereich der eingebrachten Partikel P - weiter, wodurch sich weniger Schmutz ansammeln kann. Trotz der geringeren Unebenheit der Oberfläche O_{N} weisen sie weiterhin eine prägnante Oberflächenoptik wie auch eine ausgeprägte Oberflächenhaptik auf.

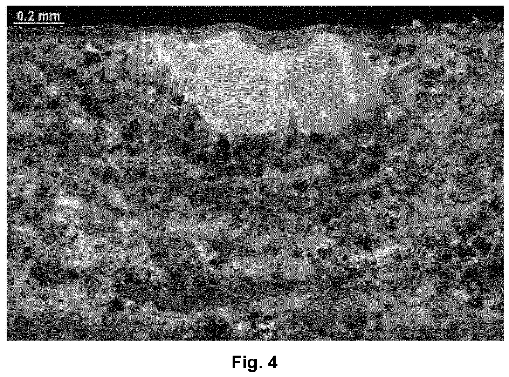

- Fig. 4:: Eine Dünnschliff-Fotographie eines beispielhaften Ausschnitts der Oberfläche O_{N} des gemäss genanntem Beispiel von Fig. 3 erfindungsgemäss hergestellten Zement-Faser Komposits K_{N}, d.h. Faserzement Der Dünnschliff wurde gemäss üblichen, dem Fachmann bekannten Methoden hergestellt und fotografiert. Der Ausschnitt zeigt deutlich wie das eingepresste Partikel P in den Zement-Faser Komposit K_{N} vollständig eingepresst ist, sodass auch keine Lufteinschlüsse zwischen dem Partikel P und dem Zement-Faser Komposit K_{N} vorhanden sind. Zudem ist der rechte Teil des Partikels P teilweise von der Matrix des Zement-Faser Komposits K_{N} umgeben, wodurch eine formschlüssige Verbindung zwischen dem Partikel P und der Matrix des Zement-Faser Komposits K_{N} entstanden ist.

## Patentansprüche

1. Verfahren zur Herstellung eines Zement-Faser Komposits K_{N} mit einer Oberfläche O_{N}, wobei auf mindestens eine Oberfläche O_{R} eines noch teigartig feuchten Zement-Faser Komposits K_{R} Partikel P aufgebracht und in die Oberfläche O_{R} des Zement-Faser Komposits K_{R} eingepresst werden, um den Zement-Faser Komposit K_{N} mit der Oberfläche O_{N} zu erhalten, wobei mindestens 90 Gew.% der Partikel P eine Partikelgrösse zwischen 0,05 und 15 mm, gemessen nach DIN 66165, aufweisen, **dadurch gekennzeichnet, dass** die Partikel P mit einem Druck von mindestens 1000 to/m², in die Oberfläche O_{R} des Zement-Faser Komposits K_{R} eingepresst werden.

2. Verfahren nach Anspruch 1, **dadurch gekennzeichnet, dass** die Partikel P ausgewählt werden aus metallischen Partikel, mineralischen Partikel, Glaspartikel, Kunststoffpartikel und/oder Partikel aus Perlmutt und/oder Edelsteinen wie Diamant.

3. Verfahren nach Anspruch 1 oder 2, **dadurch gekennzeichnet, dass** die Partikel P mit einer hydraulischen Presse und/oder mechanischen Presse in die Oberfläche O_{R} des Zement-Faser Komposits K_{R} eingepresst werden.

4. Verfahren nach mindestens einem der Ansprüche 1 bis 3, **dadurch gekennzeichnet, dass** die Partikel P so in die Oberfläche O_{R} des Zement-Faser Komposits K_{R} eingepresst werden, dass sie formschlüssig im Zement-Faser Komposit K_{R}, und somit auch formschlüssig im Zement-Faser Komposit K_{N} eingebettet sind.

5. Verfahren nach mindestens einem der Ansprüche 1 bis 4, **dadurch gekennzeichnet, dass** der Zement-Faser Komposit K_{R} 20 bis 99,5 Gew.-% Zement, 0.5 bis 15 Gew.-% Fasern, 0 bis 78 Gew.-% Füllstoffe und/oder Pigmente, 0 bis 30 Gew.-% weitere Additive, bezogen auf 100 Gew.% Trockengehalt der zur Herstellung des Zement-Faser Komposits K_{R}, K_{N} eingesetzten Rohstoffe, umfasst, wobei die Summe der einzelnen Komponenten 100 Gew.% ergibt.

6. Verfahren nach mindestens einem der Ansprüche 1 bis 5, **dadurch gekennzeichnet, dass** mindestens 90 Gew.% der Partikel P eine Partikelgrösse zwischen 0,1 und 10 mm, bevorzugt zwischen 0,2 und 5 mm, gemessen nach DIN 66165, aufweisen.

7. Verfahren nach mindestens einem der Ansprüche 1 bis 6, **dadurch gekennzeichnet, dass** die Partikel P etwa 0,1 bis 99 Flächen-%, bevorzugt 1 bis 60 Flächen-%, insbesondere 2 bis 30 Flächen-%, der Oberfläche O_{N} des Zement-Faser Komposits K_{N} bedecken.

8. Verfahren nach mindestens einem der Ansprüche 1 bis 7, **dadurch gekennzeichnet, dass** der Zement-Faser Komposit K_{N} eine Schichtdicke von bis zu ca. 20 mm, bevorzugt von 3 bis 20 mm, insbesondere von 3 bis 16 mm, gemessen mit einem Messschieber nach DIN 862, aufweist.

9. Verfahren nach mindestens einem der Ansprüche 1 bis 8, **dadurch gekennzeichnet, dass** die Oberfläche O_{N} mit einer Beschichtung und/oder Imprägnierung behandelt ist.

10. Verfahren nach mindestens einem der Ansprüche 1 bis 9, **dadurch gekennzeichnet, dass** die Partikel P so in die Oberfläche O_{R} des Zement-Faser Komposits K_{R} eingepresst werden, dass die Oberfläche O_{N} ein geschlossenes Profil aufweist und somit die in die Oberfläche O_{R} eingepressten Partikel P nicht aus der Oberfläche O_{N} herausragen.

11. Verwendung des nach dem Verfahren nach mindestens einem der Ansprüche 1 bis 10 hergestellten Zement-Faser Komposits K_{N} zur Verkleidung von Fassaden, Wänden, Böden, Dielen und/oder Dächern, insbesondere im Aussen- und/oder Innenbereich von Gebäuden, Schiffen, Fahrzeugen, Flugzeugen, Tunneln und/oder U-Bahn Stationen.

12. Verwendung des nach dem Verfahren nach mindestens einem der Ansprüche 1 bis 10 hergestellten Zement-Faser Komposits K_{N} als äussere Schicht einer Gebäudefassade, insbesondere vorgehängten Gebäudefassade.

13. Fassade, bevorzugt Gebäudefassade, insbesondere vorgehängte Gebäudefassade, umfassend mindestens einen nach dem Verfahren nach mindestens einem der Ansprüche 1 bis 10 hergestellten Zement-Faser Komposit

## Claims

1. A method for the production of a cement-fibre composite K_{N} having a surface O_{N}, wherein particles P are applied to at least one surface O_{R} of a wet cement-fibre composite K_{R} which is still pasty and are pressed into the surface O_{R} of the cement-fibre composite K_{R} in order to obtain the cement-fibre composite K_{N} with the surface O_{N}, wherein at least 90% by weight of the particles P have a particle size of between 0.05 and 15 mm, measured in accordance with DIN 66165, **characterized in that** the particles P are pressed into the surface O_{R} of the cement-fibre composite K_{R} with a pressure of at least 1000 tonne/m².

2. The method as claimed in claim 1, **characterized in that** the particles P are selected from metallic particles, mineral particles, glass particles, plastic particles and/or particles formed from nacre and/or gemstones such as diamond.

3. The method as claimed in claim 1 or claim 2, **characterized in that** the particles P are pressed into the surface O_{R} of the cement-fibre composite K_{R} with a hydraulic press and/or mechanical press.

4. The method as claimed in at least one of claims 1 to 3, **characterized in that** the particles P are pressed into the surface O_{R} of the cement-fibre composite K_{R} in a manner such that they are embedded in the cement-fibre composite K_{R} in an interlocked manner, and thus are also embedded in the cement-fibre composite K_{N} in an interlocked manner.

5. The method as claimed in at least one of claims 1 to 4, **characterized in that** the cement-fibre composite K_{R} comprises 20% to 99.5% by weight of cement, 0.5% to 15% by weight of fibres, 0 to 78% by weight of fillers and/or pigments, 0 to 30% by weight of further additives, with respect to 100% by weight of dry matter content of the raw materials used for the production of the cement-fibre composite K_{R}, K_{N}, wherein the sum of the individual components amounts to 100% by weight.

6. The method as claimed in at least one of claims 1 to 5, **characterized in that** at least 90% by weight of the particles P has a particle size between 0.1 and 10 mm, preferably between 0.2 and 5 mm, measured in accordance with DIN 66165.

7. The method as claimed in at least one of claims 1 to 6, **characterized in that** the particles P cover approximately 0.1% to 99% of the surface area, preferably 1% to 60% of the surface area, in particular 2% to 30% of the surface area of the surface O_{N} of the cement-fibre composite K_{N}.

8. The method as claimed in at least one of claims 1 to 7, **characterized in that** the cement-fibre composite K_{N} has a thickness of up to approximately 20 mm, preferably from 3 to 20 mm, in particular from 3 to 16 mm, measured using a calliper gauge in accordance with DIN 862.

9. The method as claimed in at least one of claims 1 to 8, **characterized in that** the surface O_{N} is treated by coating and/or by impregnation.

10. The method as claimed in at least one of claims 1 to 9, **characterized in that** the particles P are pressed into the surface O_{R} of the cement-fibre composite K_{R} in a manner such that the surface O_{N} has a closed profile and therefore the particles P pressed into the surface O_{R} do not protrude from the surface O_{N}.

11. Use of the cement-fibre composite K_{N} produced by the method as claimed in at least one of claims 1 to 10, for cladding façades, walls, floors, boards and/or roofs, in particular in the exterior and/or interior regions of buildings, seagoing vessels, vehicles, aircraft, tunnels and/or underground railway stations.

12. Use of the cement-fibre composite K_{N} produced by the method as claimed in at least one of claims 1 to 10, as an exterior coating for a building façade, in particular a curtain façade for buildings.

13. A façade, preferably a building façade, in particular a curtain façade for a building, comprising at least one cement-fibre composite K_{N} produced by the method as claimed in at least one of claims 1 to 10.

## Revendications

1. Procédé, destiné à fabriquer un composite ciment-fibre K_{N} pourvu d'une surface O_{N}, lors duquel, sur au moins une surface O_{R} d'un composite ciment-fibre K_{R} encore humide à la manière d'une pâte, on applique des particules P et on les injecte dans la surface O_{R} du composite ciment-fibre K_{R} pour obtenir le composite ciment-fibre K_{N} présentant la surface O_{N}, au moins 90 % en poids des particules P présentant une taille de particules comprise entre 0,05 et 15 mm, mesurée selon la norme DIN 66165, **caractérisé en ce qu'**on injecte les particules P avec une pression d'au moins 1000 to/m² dans la surface O_{R} du composite ciment-fibre K_{R}.

2. Procédé selon la revendication 1, **caractérisé en ce qu'**on sélectionne les particules P parmi les particules métalliques, les particules minérales, les particules de verre, les particules de matière plastique et/ou les particules de nacre et/ou les particules de pierres précieuses, comme le diamant.

3. Procédé selon la revendication 1 ou 2, **caractérisé en ce qu'**on injecte les particules P à l'aide d'une presse hydraulique et/ou d'une presse mécanique dans la surface O_{R} du composite ciment-fibre K_{R}.

4. Procédé selon au moins l'une quelconque des revendications 1 à 3, **caractérisé en ce qu'**on injecte les particules P dans la surface O_{R} du composite ciment-fibre K_{R} de sorte qu'elles soient incorporées par complémentarité de forme dans le composite ciment-fibre K_{R}, et ainsi également incorporées par complémentarité de forme dans le composite ciment-fibre K_{N}.

5. Procédé selon au moins l'une quelconque des revendications 1 à 4, **caractérisé en ce que** le composite ciment-fibre K_{R} comprend de 20 à 99,5 % en poids de ciment, de 0.5 à 15 % en poids de fibres, de 0 à 78 % en poids d'agents de charge et/ou de pigments, de 0 à 30 % en poids d'additifs additionnels, rapportés aux 100 % en poids de teneur en matières sèches des matières premières mises en oeuvre pour la fabrication du composite ciment-fibre K_{R}, K_{N}, la somme des composants individuels étant de 100 % en poids.

6. Procédé selon au moins l'une quelconque des revendications 1 à 5, **caractérisé en ce qu'**au moins 90 % en poids des particules P présentent une taille de particules comprise entre 0,1 et 10 mm, de préférence entre 0,2 et 5 mm, mesurée selon la norme DIN 66165.

7. Procédé selon au moins l'une quelconque des revendications 1 à 6, **caractérisé en ce que** les particules P recouvrent environ de 0,1 à 99 de % en surface, de préférence de 1 à 60 de % en surface, notamment de 2 à 30 de % en surface de la surface O_{N} du composite ciment-fibre K_{N}.

8. Procédé selon au moins l'une quelconque des revendications 1 à 7, **caractérisé en ce que** le composite ciment-fibre K_{N} présente une épaisseur de couche de jusqu'à environ 20 mm, de préférence de 3 à 20 mm, notamment de 3 à 16 mm, mesurée à l'aide d'un pied à coulisse selon la norme DIN 862.

9. Procédé selon au moins l'une quelconque des revendications 1 à 8, **caractérisé en ce que** la surface O_{N} est traitée avec un revêtement et/ou une imprégnation.

10. Procédé selon au moins l'une quelconque des revendications 1 à 9, **caractérisé en ce qu'**on injecte les particules P dans la surface O_{R} du composite ciment-fibre K_{R} de telle sorte que la surface O_{N} présente un profil fermé et qu'ainsi les particules P injectées dans la surface O_{R} ne saillissent pas hors de la surface O_{N}.

11. Utilisation du composite ciment-fibre K_{N} fabriqué d'après le procédé selon au moins l'une quelconque des revendications 1 à 10 pour l'habillage de façades, de parois, de sols, de couloirs et/ou de toits, notamment en extérieur et/ou en intérieur de bâtiments, de bateaux, de véhicules, d'avions, de tunnels et/ou de stations métro.

12. Utilisation du composite ciment-fibre K_{N} fabriqué d'après le procédé selon au moins l'une quelconque des revendications 1 à 10 en tant que couche extérieure d'une façade de bâtiment, notamment d'une façade-rideau de bâtiment.

13. Façade, de préférence façade de bâtiment, notamment façade-rideau de bâtiment, comprenant au moins un composite ciment-fibre K_{N} fabriqué d'après le procédé selon au moins l'une quelconque des revendications 1 à 10.
